# EUROPEAN PATENT APPLICATION

(11) **EP 4 415 243 A1**
(43) Date of publication of application: **14.08.2024**
(21) Application number: 23159287.4
(22) Date of filing: 01.03.2023
(51) Int. Cl.: H02M 3/07, H02M 3/158, H02M 1/00, H01L 29/12, H01L 29/16

(54) **HIGH STEP-DOWN CONVERTER**

(30) Priority: 08.02.2023 PL 44372123
(71) Applicant: Akademia Gorniczo-Hutnicza im. Stanislawa Staszica w Krakowie, 30-059 Krakow (PL)
(72) Inventor: Stala, Robert, 30-221 Kraków (PL)
(74) Representative: Wlasienko, Jozef

(57) **Abstract**

The subject of the invention is a voltage step-down converter with an extended range of obtained stepped-down output voltages, comprising a capacitive input divider which constitutes a branch of three capacitors (1), (2) and (3) connected in series, connected between a positive input terminal (10) and a negative input terminal (11), wherein a negative output of the capacitor (1) included in the input capacitor divider connected to the negative input terminal (11) of supply voltage U_{IN} and to an output of a controlled switch (5), whose output is connected to a negative output terminal (13) of stepped-down output voltage and to a negative input of an output capacitor (39), as well as to an input of a controlled switch (7) and to an anode of a diode (4). A positive input of the capacitor (3) is connected to the positive input terminal (10) of the supply voltage U_{IN} and to an input of a controlled switch (6), whose output is connected to an input of a choke (18) and to an output of a controlled bidirectional switch (8) and to a cathode of a diode (9), whereas an output of the choke (18) is connected to a positive input of the output capacitor (39) and to a positive output terminal (12) of the stepped-down output voltage. Whereas to a connection point of the capacitors (2) and (3), a cathode of the diode (4) and an input of the controlled bidirectional switch (8) are connected, and to a connection point of the capacitors (1) and (2), an anode of the diode (9) and an output of the controlled bidirectional switch (7) are connected.

## Description

The subject of the invention is a voltage step-down converter system with an extended range of obtained stepped-down output voltages.

A buck converter (voltage step-down converter) is a type of a DC-DC converter without galvanic isolation between an input and an output. Output voltage is lower than input voltage, whereas output current may be higher than input current.

DC-DC step-down converters are very widely used to power various electronic devices. They are used in computer devices, communication devices, various control and automation circuits, etc. The DC-DC step-down converters constituting electricity conversion systems are used in particular as power supply systems for devices in data centres and power supply systems for microprocessor units powered by low voltage when distributing energy with a voltage of e.g. 48 V.

A problem with using the buck converter for large step-downs of voltage is related to its electrical efficiency reduction. In application note 2016, 2021, 2022 ROHM Co., Ltd. No. 64AN035E Rev.003 "Efficiency of buck Converter", 2016 ROHM Co., the dependences of the efficiency of the buck system as a function of the output voltage are given, which results in a significant decrease in efficiency for the implementation of low output voltages. Another unfavourable feature is the voltage value on the transistor and diode in the buck converter, which reaches the value of the input voltage. The DC-DC buck converter is a simple concept solution, however, it is very preferred that efficiency at a significant voltage reduction and maximum voltage values of the system elements are improved. For this purpose, systems with a more complex topology and control are implemented.

The problem related to extending the range of stepped-down output voltages obtained in the buck converters is solved by using capacitor voltage dividers arranged before the control block of pulse converters.

US patent application No. 2018041120 A1 discloses an embodiment providing a DC-DC converter system comprising a plurality of switches configured to receive input DC power having a DC voltage level from a DC voltage source. A first capacitor of an input divider is coupled to the plurality of controlled switches. A second capacitor of the divider is also coupled to the plurality of controlled switches. A controller of the converter is configured to operate the plurality of switches such that in a first mode, voltage across the first capacitor is at a level equal to substantially half of the input voltage level, and in a second mode, voltage across the second capacitor is at a level equal to substantially half of the input voltage level. An output voltage level is stepped down by a voltage step-down ratio, in relation to the input voltage level.

Chinese patent application No. CN105207471A discloses an embodiment of a low-voltage-stress high-voltage-drop DC-DC converter. The low-voltage-stress high-voltage-drop DC/DC converter comprises two power inductors, two diodes and "n" voltage drop units. Each voltage drop unit is composed of two power switches and two capacitors. Compared with an existing voltage drop converter, the low-voltage DC-DC of this invention is simple in design and implementation scheme, no transformer nor coupling inductor is included, the EMI characteristic is good, the input-output voltage drop ratio is adjustable, and the overall working efficiency of the converter is improved.

The invention described in the specification of Taiwanese patent TW201608807 provides a single-stage high step-down DC-DC converter, comprising an input unit, a DC-DC converting circuit, and an output unit. The input unit inputs power from a DC source. The DC-DC converting circuit, electrically coupled to the input unit at one end and the output unit at another end, converts a DC voltage level of the power received from the input unit to another DC voltage level. The output unit outputs the power at a stepped-down voltage level. The DC-DC converting circuit regulates the voltage levels by employing a voltage gain to achieve a high voltage step-down ratio.

The cited examples of output voltage step-down pulse converter systems with an extended range of obtained stepped-down voltages, in relation to the classic buck converter system, use input voltage capacitor dividers. The examples of topologies of voltage step-down pulse systems with an extended range of obtained stepped-down voltages known from the prior art differ in the degree of complexity, the number of elements used and the control method.

The inventive problem is the system topology of the output voltage step-down pulse converter in an extended range of obtained stepped-down voltages, with a simple design, improved efficiency, reduced number of elements and with reduced voltage stress on switching elements of the converter system.

The task of the invention consisting in solving the inventive problem has been achieved by means of a new concept of the step-down converter system topology with an extended range of obtained stepped-down output voltages and simplifying its control, which is the subject of the invention.

A voltage step-down converter, with an extended range of obtained stepped-down output voltages, comprising a capacitive input divider, connected between a positive input terminal In1 and a negative input terminal In2, and an input voltage selection and keying set, composed of controlled switches and diodes and a discharge circuit, as well as of a choke and a capacitor filtering output voltage, wherein the switches of the converter are controlled by means of a central control unit, is characterized by an input capacitor divider, which constitutes a branch of three capacitors C1, C2 and C3 connected in series, connected between the positive input terminal In1 and the negative input terminal In2, wherein a negative input of the capacitor C1 included in the input capacitor divider is connected to the negative input terminal In2 of supply voltage U_{IN} and to an output of a controlled switch S1. Whereas a positive input of the capacitor C1 is connected to a negative input of the capacitor C2, whose positive input is connected to a negative output of the capacitor C3, whereas, in turn, a positive input of the capacitor C3 is connected to the positive input terminal In1 of the supply voltage U_{IN} and to an input of a controlled switch S2, whose output is connected to an input of a choke L1 and to an output of a controlled bidirectional switch S4 and to a cathode of a diode D2, whereas an output of the choke L1 is connected to a positive input of an output capacitor Cₒᵤₜ and to a positive output terminal Out1 of stepped-down output voltage. A negative input of the output capacitor Cₒᵤₜ is, in turn, connected to a negative output terminal Out 2 of the stepped-down output voltage, which is connected to an input of the controlled switch S1 and to an input of a controlled switch S3 and to an anode of a diode D1. A cathode of the diode D1 is connected to the negative input of the capacitor C3 and to the positive input of the capacitor C2 and to an input of the controlled bidirectional switch S4, whereas the output of the controlled bidirectional switch S4 is connected to the output of the controlled switch S2 and to the cathode of the diode D2 and to the input of the choke L1, whose output is connected to the positive input of the capacitor Cout and to the positive output terminal Out1 of the stepped-down output voltage.

In a second system version according to the invention, an input capacitor divider constitutes a branch of three capacitors C1, C2 and C3 connected in series, connected between a positive input terminal In1 and a negative input terminal In2, wherein a negative output of the capacitor C1 included in the input capacitor divider is connected to the negative input terminal In2 of supply voltage U_{IN} and to a cathode of a diode D5. A positive input of the capacitor C3 included in the input capacitor divider is connected to the positive input terminal In1 of the supply voltage U_{IN} and to an input of a controlled switch S2, and its output is connected to an input of a choke L1 and to an output of a controlled bidirectional switch S4, whereas an output of the choke L1 is connected to an output of a choke L2 and to a positive input of an output capacitor Cₒᵤₜ and to a positive output terminal Out1 of stepped-down output voltage. A negative input of the output capacitor Cₒᵤₜ is, in turn, connected to a negative output terminal Out2 of the stepped-down output voltage and to an input of a controlled bidirectional switch S5 and to an input of a controlled bidirectional switch S6 and to an anode of a diode D3 and to an input of a controlled bidirectional switch S3 of the first circuit and to an anode of a diode D1, whose cathode is connected to an input of the controlled bidirectional switch S4 and to a positive input of the capacitor C2 and to a negative input of the capacitor C3. A cathode of the diode D3 is connected to an input of a controlled bidirectional switch S7 and to a negative input of a capacitor C6 and to a positive input of a capacitor C5, whereas a negative input of the capacitor C5 is connected to an output of the controlled bidirectional switch S6 and to an anode of a diode D4 and to a positive input of a the capacitor C4, whereas a negative input of the capacitor C4 is connected to an output of the controlled bidirectional switch S5 and to an anode of the diode D5. An output of the controlled bidirectional switch S7 is, in turn, connected to an output of a controlled bidirectional switch S8, to a cathode of the diode D4 and to an input of the choke L2. A connection point of a positive input of the capacitor C1 and of a negative input of the capacitor C2 and of an output of the bidirectional switch S3 of the first circuit is connected to an input of the bidirectional switch S8 and to a positive input of the capacitor C6 of the second circuit, constituting a positive input of constant input voltage of the second circuit.

Preferably, in the voltage step-down converter with an extended range of obtained stepped-down output voltages according to the invention, each of the bidirectional switches S3 and S4 in a basic system and in a cascade system, which is the second version of the system, of the bidirectional switches S5, S6, S7 and S8, constitutes a set of two transistors, transistors T103 and T203 in the switch S3, transistors T104 and T204 in the switch S4, transistors T105 and T205 in the switch S5, transistors T106 and T206 in the switch S6, transistors T107 and T207 in the switch S7, and transistors T108 and T208 in the switch S8, respectively, connected oppositely by connecting sources of both transistors of each set, in case of using MOSFET or GaN transistors, and emitters in case of using IGBT transistors, whereas an input of each of the bidirectional switches is a source of a first transistor and an output of a switch is a drain of a second transistor of a set, or connected oppositely by connecting collectors of both transistors of each set, in case of using IGBT transistors, whereas an input of each of the bidirectional switches is an emitter of a first transistor and an output of a switch is an emitter of a second transistor of a set.

It is also preferred when each of the bidirectional switches S3, S4, S5, S6, S7 and S8 is a dual-gate GaN transistor with bidirectional conduction and blocking.

An advantageous effect of the invention is a significant reduction in the voltage value (<1/3 Uin) of used transistors and diodes that block the voltage at the level of 1/3 of the input voltage and the rated voltage on the semiconductor elements reaches the value of 1/3 of the input voltage. The basic topology of the voltage step-down converter with an extended range of obtained stepped-down output voltages according to the invention comprises three capacitors and two diodes and four controlled switches, which is a much smaller number than in systems with comparable parameters.

It is also advantageous that the system according to the invention can work with a higher duty cycle of the transistor control signals compared to the buck system, which is a factor that allows for higher efficiency of the system.

Advantages of the proposed solution compared to the buck converter are presented in Table 1.

**Table 1. Comparison of selected parameters of the present solution with the buck-type voltage step-down converter**

| Parameter | Present solution | Buck converter |
|---|---|---|
| Voltage boost | Uout=D*Uin/3 | Uout=D*Uin |
| Voltage across semiconductor elements | Uin/3 | Uin |
| Voltage across the choke in the output filter | (Uin/3-Uout, -Uout) | (Uin-Uout, -Uout) |
| Current load of transistors and diodes | Up to 1/3 smaller than in the buck | |

In the solution according to the invention, the voltage across the transistor, the diode and the choke has three times lower rated maximum values, which is a beneficial feature that improves parameters of the converter.

The voltage stress determines the rated voltage on the switches, therefore a reduction of the voltage stress on the system elements is a beneficial feature, because it reduces the cost and enables the improvement of the parameters of the elements used in the system, such as transistors, diodes, chokes and capacitors.

The system of the solution according to the invention improves basic parameters of the buck converter and is an alternative solution for much more complex systems. At the same time it uses the concept of the bidirectional switch, which has a chance for future development in the technique of gallium nitride (GaN) based transistors.

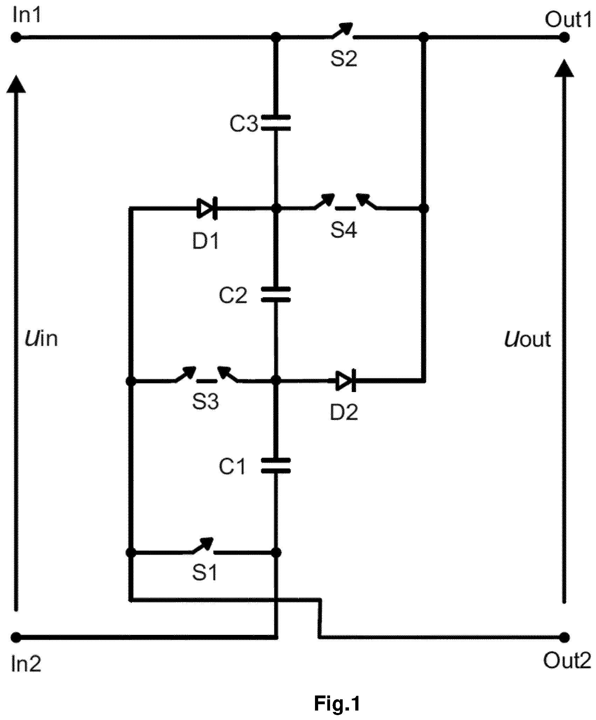

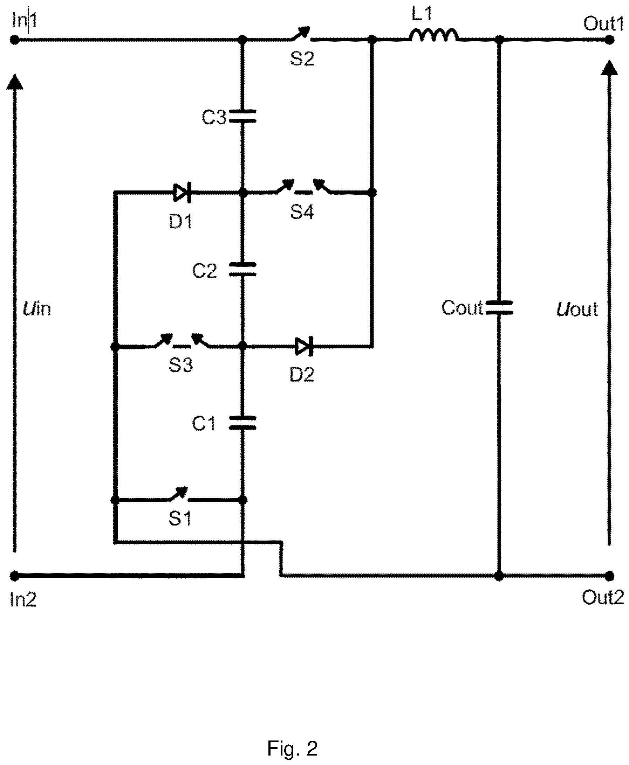

The subject of the invention is shown in embodiments in the drawing in which Fig. 1 is a simplified schematic diagram of a pulse part of a converter constituting a system of forming and impulses of input voltage from an input capacitor divider, according to the invention, Fig. 2 is a simplified schematic diagram of a voltage step-down converter according to the invention in a first version, which is a combination of the pulse part of the system with inductive and capacitive elements constituting the output filter of the system, Fig.3 is a schematic diagram of the voltage step-down converter according to the invention in the first version Fig.4 is a simplified schematic diagram of the voltage step-down converter according to the invention in a second version, Fig. 5 is a schematic diagram of the voltage step-down converter according to the invention in the second version, and Fig. 6 is a simplified schematic diagram of the voltage step-down converter with an extended range of obtained stepped-down output voltages according to the invention, in the first version, in which bidirectional switches have been replaced by MOSFET or GaN transistors connected oppositely, whereas Fig. 7 is a simplified schematic diagram of the voltage step-down converter with an extended range of obtained stepped-down output voltages according to the invention, in the first version, in which the bidirectional switches have been replaced by dual-gate GaN transistors.

The voltage step-down converter system with an extended range is characterized by improved efficiency and lower voltage values on the elements when comparing to the basic buck system. Buck-type voltage step-down converters are commonly used due to the fact that the main block of the converter ensures high energy efficiency and contains a small number of components. Output voltage of the converter depends, among others, on the operating point, therefore in the buck converters a system controlling the operation of the main switch is used.

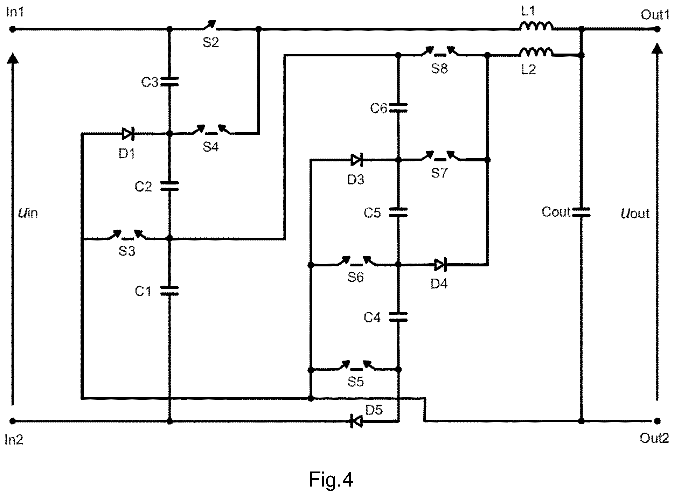

The system of the converter according to the invention has at its input a branch of three connected of capacitors. On each input capacitor a voltage should be present that is three times less than the input voltage. Pulses of the output voltage are formed from this voltage, where in the pulse period of the converter (Ts) the state Uin/3 appears for the time ton, and the zero value of the voltage for the time Ts-ton. The duty cycle of the output voltage pulse can be described as: D=ton/Ts. The average value of the output voltage is Uout=D*Uin/3 which is a much lower value than in the classic buck converter. For D=1/2 the output voltage may be kept at the level of Uout=D*Uin/6. In the case of a cascade system, shown in the drawing element in Fig. 4, for D=1/2 in the second section of the system the output voltage may be kept at the level of Uout=Uin/18.

A new element in relation to the prior art is the control system and method that allows to obtain a significant reduction in the voltage value (<1/3) of used transistors and diodes that block the voltage at the level of 1/3 of the input voltage, and the duty factor when forming pulses of the output voltage is three times wider than in the case of the buck converter, which can have a positive effect on the efficiency of the system. The efficiency of the system can be improved, also because the proposed solution can use elements with a lower rated voltage, which in the case of transistors allows to reduce their resistance.

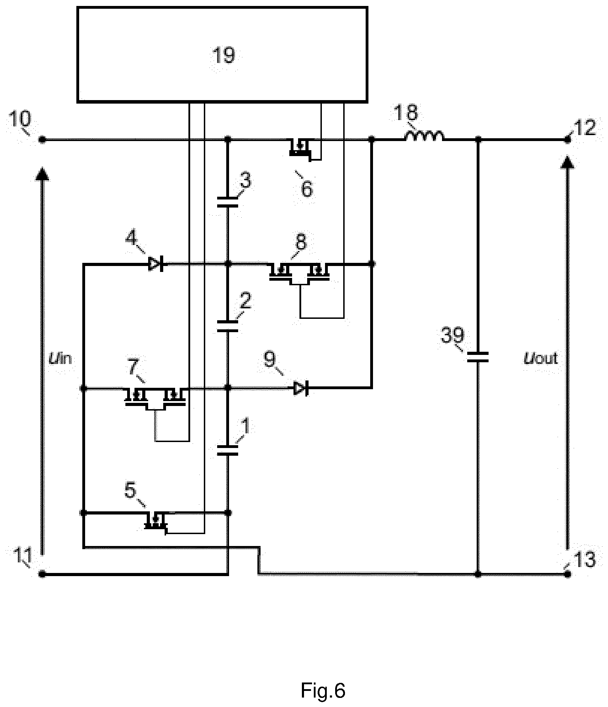

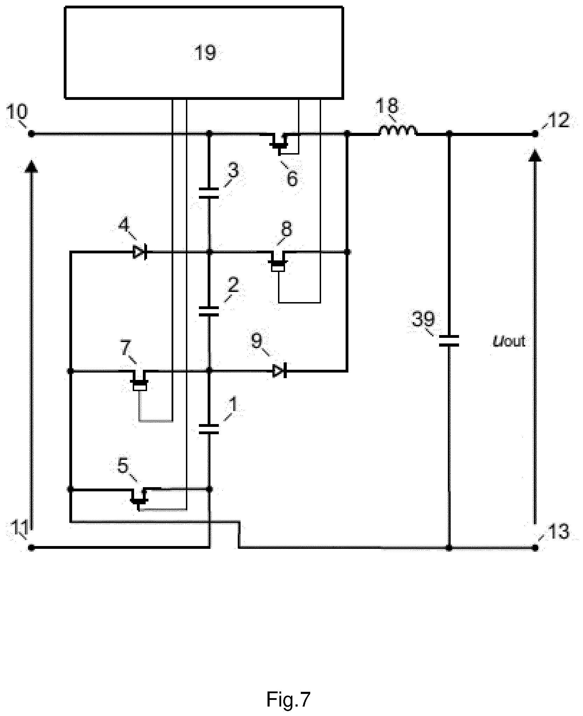

A new element in relation to the prior art is also a system that is suitable for using dual-gate GaN transistors (or new concepts of GaN transistors with bidirectional conduction and blocking). The system according to the invention can be implemented using GaN, MOSFET Si or SiC and IGBT transistors. Fig. 6 shows an embodiment of the system using GaN (gallium nitride) transistors or MOSFET transistors, and Fig. 7 shows an embodiment of the system using gallium nitride (GaN) transistors.

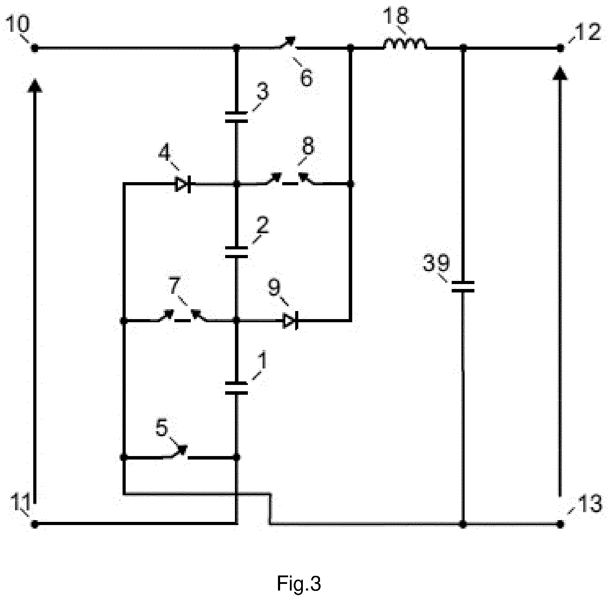

An embodiment of the converter system according to the invention in the first version is illustrated in Fig. 3. The system was created by replacing the controlled keying switch and the discharge current sustaining diode, present in the basic version of the buck converter, with a system consisting of an input capacitor divider consisting of three capacitors C1 - 1, C2 - 2 and C3 - 3, two diodes D1 - 4 and D2 - 9 and a set of four switches of which two S1 - 5 and S2 - 6 are controlled unidirectional switches whereas the remaining two S3 - 7 and S4 - 8 are controlled bidirectional switches.

The semiconductor elements are GaN transistors, such as 5 and 6, and GaN transistors implemented as bidirectional (also called dual-gate transistors), such as 7 and 8. The system is controlled by means of an FPGA electronic component. The transistors are controlled in such a way that at the output of the pulse part of the system (between the node connecting the transistor 6 and a choke 18 and an output terminal 13), voltage pulses appear with a width controlled by the control system. The voltage pulses at the output of the pulse part of the system are obtained by controlling the transistors in such a way that in subsequent pulses the load current flows through another capacitor of the input divider 1, 2 or 3. If the transistor 5 is turned on in the first pulse cycle, the current flowing to the output through the choke 18 also flows through the diode 9 and the capacitor 1. In the second pulse cycle, the transistors 7 and 8 are turned on, and the current flowing through to the output through the choke 18 also flows through the capacitor 2. In the third pulse cycle, the transistor 6 and the diode 4 are turned on, and the current flowing to the output through the choke 18 also flows through the diode and the capacitor 3. Between the states in which positive voltages are present at the output of the pulse circuit part, there are states with zero voltage, obtained by turning on the transistor 7 or 8. The system implemented in the technique of GaN transistors enables operation at high frequency, with low energy losses resulting from switching semiconductor elements, and allows to simplify the design of the system by using transistors with bidirectional blocking and conduction, once they are commercially widely available.

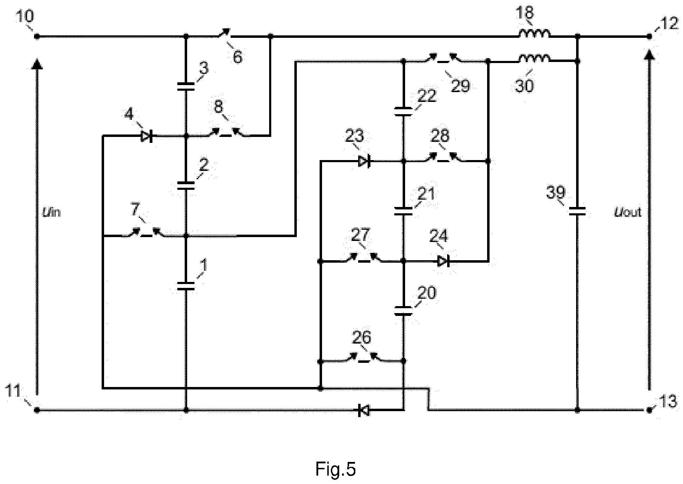

An embodiment of the converter system according to the invention in the second version is illustrated in Fig. 5. The semiconductor elements are MOSFET transistors. The system is controlled using an FPGA electronic component. The transistors are controlled in such a way that at the output of the pulse part of the system (between the node connecting the transistor S2 and a choke L1, an the output terminal Out2), voltage pulses appear with a width controlled by the control system. The voltage pulses at the output of the pulse part of the system are obtained by controlling the transistors in such a way that in subsequent pulses the load current flows through another capacitor of the input divider C1, C2 or C3. If the transistor S1 is turned on in the first pulse cycle, the current flowing to the output through the choke L1 also flows through the diode D2 and the capacitor C1. In the second pulse cycle, the transistors S3 and S4 are turned on, and the current flowing through to the output through the choke L1 also flows through the capacitor C2. In the third pulse cycle, the transistor S2 and the diode D1 are turned on, and the current flowing to the output through the choke L1 also flows through the diode capacitor C3. Between the states in which positive voltages are present at the output of the pulse circuit part, there are states with zero voltage, obtained by turning on the transistor S3 or S4. The system implemented in the technique of MOSFET transistors enables operation at high frequency, with low energy losses resulting from switching semiconductor elements.

The DC-DC converters with a large degree of voltage reduction according to the invention are applicable in power supplies for LEDs, power supplies for computing units operating at low voltage in data centres as well as in the distribution of electricity with a voltage of e.g. 12, 24 or 48 V.

### List of reference signs

- **C1**: first capacitor of the voltage divider of the first circuit,
- **C2**: second capacitor of the voltage divider of the first circuit,
- **C3**: third capacitor of the voltage divider of the first circuit,
- **D1**: first diode of the first circuit,
- **S1**: first controlled switch of the first circuit,
- **S2**: second controlled switch of the first circuit,
- **S3**: third bidirectional controlled switch of the first circuit,
- **S4**: fourth bidirectional controlled switch of the first circuit,
- **D2**: second diode of the first circuit,
- **In1**: positive input terminal of the supply voltage UIN,
- **In2**: negative input terminal of the supply voltage UIN,
- **Out1**: positive output terminal of the voltage step-down converter,
- **Out2**: negative output terminal of the voltage step-down converter,
- **T103**: first transistor of the bidirectional switch S3
- **T203**: second transistor of the bidirectional switch S3
- **T104**: first transistor of the bidirectional switch S4
- **T204**: second transistor of the bidirectional switch S4
- L1: choke of the first circuit
- **CPU**: control unit and circuits connected to a transistor gate - in embodiments built based on the FPGA system (Field Programmable Gate Array)
- **C4**: first capacitor of the voltage divider of the second circuit,
- **C5**: first capacitor of the voltage divider of the second circuit,
- **C6**: first capacitor of the voltage divider of the second circuit,
- **D3**: first diode of the second circuit,
- **D4**: second diode of the second circuit,
- **D5**: third diode of the second circuit,
- **S5**: first bidirectional controlled switch of the second circuit,
- **S6**: second bidirectional controlled switch of the second circuit,
- **S7**: third bidirectional controlled switch of the second circuit,
- **S8**: fourth bidirectional controlled switch of the second circuit,
- **L2**: choke of the second circuit,
- **T105**: first transistor of the bidirectional switch S5,
- **T205**: second transistor of the bidirectional switch S5,
- **T106**: first transistor of the bidirectional switch S6,
- **T206**: second transistor of the bidirectional switch S6,
- **T107**: first transistor of the bidirectional switch S7,
- **T207**: second transistor of the bidirectional switch S7,
- **T108**: first transistor of the bidirectional switch S8,
- **T208**: second transistor of the bidirectional switch S8,
- **Cₒᵤₜ**: output capacitor of the voltage step-down converter,
- **U_{IN}**: input voltage of the voltage step-down converter,
- **Uₒᵤₜ**: output voltage of the voltage step-down converter.

## Claims

1. A voltage step-down converter with an extended range of obtained stepped-down output voltages, comprising a capacitive input divider, connected between a positive input terminal (10) and a negative input terminal (11) of an input voltage U_{IN}, and an input voltage selection and keying set and a discharge circuit, composed of controlled switches and diodes as well as of a choke and a capacitor filtering output voltage U_{OUT}, wherein the switches of the converter are controlled by means of a central control unit (19), **characterized by** an input capacitor divider, which constitutes a branch of three capacitors (1), (2) and (3) connected in series, connected between the positive input terminal (10) and the negative input terminal (11), wherein a negative output of the capacitor (1) included in the input capacitor divider, is connected to the negative input terminal (11) of the supply voltage U_{IN} and to an output of a controlled switch (5), and a positive input of the capacitor (1) is connected to a negative input of the capacitor (2), whose positive input is connected to a negative output of the capacitor (3), whereas a positive input of the capacitor (3) is connected to the positive input terminal (10) of the supply voltage U_{IN} and to an input of a controlled switch (6), whose output is connected to an input of a choke (18) and to an output of a controlled bidirectional switch (8) and to a cathode of a diode (9), whereas an output of the choke (18) is connected to a positive input of an output capacitor (39) and to a positive output terminal (12) of stepped-down output voltage, whereas, in turn, a negative input of the output capacitor (39) is connected to a negative output terminal (13) of the stepped-down output voltage, which is connected to an input of the controlled switch (5) and to an input of a controlled switch (7) and to an anode of a diode (4), whereas a cathode of the diode (4) is connected to the negative input of the capacitor (3) and to the positive input of the capacitor (2) and to an input of the controlled bidirectional switch (8), whereas the output of the controlled bidirectional switch (8) is connected to the output of the controlled switch (6), to the cathode of the diode (9) and to the input of the choke (18).

2. The voltage step-down converter according to claim 1 **characterized by** the input capacitor divider, which constitutes the branch of the three capacitors (1), (2) and (3) connected in series, connected between the positive input terminal (10) and the negative input terminal (11), wherein the negative input of the capacitor (1) is connected to the negative input terminal (11) of the supply voltage U_{IN} and to a cathode of a diode (25), whereas the positive input of the capacitor (3) is connected to the positive input terminal (10) of the supply voltage U_{IN} and to the input of the controlled switch (6), whose output is connected to the output of the controlled bidirectional switch (8) and to the input of the choke (18), whereas the output of the choke (18) is connected to an output of a choke (30) and to the positive input of the output capacitor (39) and to the positive output terminal (12) of the stepped-down output voltage, whereas, in turn, the negative input of the output capacitor (39) is connected to the negative output terminal (13) of the stepped-down output voltage and to an input of a controlled bidirectional switch (26) and to an input of a controlled bidirectional switch (27) and to an anode of a diode (23) and to the input of the controlled switch (7) and to the anode of the diode (4) of the first circuit, whose cathode is connected to the input of the controlled bidirectional switch (8) and to the positive input of the capacitor (2) and to the negative input of the capacitor (3), and a cathode of the diode (23) is connected to a negative input of a capacitor (22) and to a positive input of a capacitor (21) and to an input of a controlled bidirectional switch (28), whereas a negative input of the capacitor (21) is connected to an output of the controlled bidirectional switch (27) and to an anode of a diode (24) and to a positive input of a capacitor (20), whereas a negative input of the capacitor (20) is connected to an output of the controlled bidirectional switch (26) and to an anode of the diode (25), whereas an output of the controlled bidirectional switch (28) is connected to an output of a controlled bidirectional switch (29), to a cathode of the diode (24) and to an input of the choke (30), whereas a connection point of the positive input of the capacitor (1) and of the negative input of the capacitor (2) and of an output of the bidirectional switch (7) from the first circuit is connected to an input of the bidirectional switch (29) and to a positive input of the capacitor (22) of the second circuit, constituting a positive input of constant input voltage of the second circuit.

3. The voltage step-down converter according to claim 1 or 2 **characterized in that** each of the bidirectional switches (7), (8), (26), (27), (28) and (29), is a set of two transistors, transistors (14) and (15) in the switch (7), transistors (16) and (17) in the switch (8), transistors (31) and (32) in the switch (26), transistors (33) and (34) in the switch (27), transistors (35) and (36) in the switch (28), and transistors (37) and (38) in the switch (29), respectively, connected oppositely by connecting drains of both transistors of each set, in case of using MOSFET or GaN transistors, whereas an input of each of the bidirectional switches is a source of a first transistor and an output of a switch is a source of a second transistor of a set, or connected oppositely by connecting emitters of both transistors of each set, in case of using IGBT transistors, whereas an input of each of the bidirectional switches is a collector of a first transistor, and an output of a switch is a collector of a second transistor of a set.

4. The DC-DC converter according to claim 1 or 2 and 3 **characterized in that** each of the bidirectional switches (7), (8), (26), (27), (28) and (29) is a dual-gate GaN transistor capable of bidirectional conduction and blocking.
